# EUROPEAN PATENT SPECIFICATION

(11) **EP 3 061 986 B1**
(45) Date of publication and mention of the grant of the patent: **05.08.2020**
(21) Application number: 14856512.0
(22) Date of filing: 20.10.2014
(51) Int. Cl.: F16F 9/28, B61F 5/24, F16F 9/02, F16F 9/32, F16F 9/50, F16F 9/46

(54) **DAMPER DEVICE**
DÄMPFUNGSVORRICHTUNG
DISPOSITIF AMORTISSEUR

(30) Priority: 24.10.2013 JP 2013220848
(43) Date of publication of application: 31.08.2016
(73) Proprietor: Pneumatic Servo Controls Ltd., Owariasahi-shi Aichi 488-0871 (JP); Nippon Steel Corporation, Tokyo 100-8071 (JP)
(72) Inventor: SASAKI, Katsumi, Owariasahi-shi Aichi 488-0871 (JP); GOTO, Osamu, Tokyo 100-8071 (JP); MATSUI, Toshiaki, Tokyo 100-8071 (JP)
(74) Representative: Boult Wade Tennant LLP
(86) International application number: PCT/JP2014/077798
(87) International publication number: WO 2015/060233

(56) References cited:
- JP-A- S6 170 238
- JP-A- H08 303 521
- JP-A- S63 111 332
- JP-A- 2008 095 953
- JP-A- 2008 095 953
- JP-A- 2013 067 259
- US-A- 2 580 825
- US-A- 4 736 931
- US-A1- 2002 175 035

## Description

### TECHNICAL FIELD

The present invention relates to a damper device, and in particular to a damper device having a cylinder which is divided into two gas chambers by a piston and in which the two gas chambers act as a damper with respect to a movement of the piston.

### BACKGROUND

A damper is widely in use for attenuating vibration. For example, JP H9-301164 A describes a vibration suppressing device for a railroad car in the related art in which a spring formed from an air spring or a coil spring is interposed between a car body and a platform car, to absorb an impact received by the car body from the platform car. With such a configuration, the impact is absorbed, and riding comfort is improved. However, a vibration of the air spring itself is produced and the car body may consequently vibrate, which may cause discomfort for the passengers. In consideration of this, JP H9-301164 A describes use of left-and-right moving dampers for attenuating a lateral vibration of the air spring.

JP 2013-067259 A discloses a damper device which operates by a high-pressure gas having the pressure increased by a pressure-increasing device. With such a configuration, the size of the damper device is reduced, and, as the rigidity with respect to a displacement in the axial direction of the piston is improved, a responsiveness of a damper characteristic is improved.

US 2002/175035 A1 discloses a spring damper system for bicycles.

US 4 736 931 A discloses a dampening shock absorber for retrofit or original construction with a conventional gas charged or hydraulic shock absorber or strut.

US 2 580 825 A discloses a brush holder for an electrical swivel.

JP 2008 095953 A discloses an air pressure shock absorber for suspension apparatus of a motor vehicle.

### SUMMARY

### TECHNICAL PROBLEM

In a gas chamber divided into two gas chambers by a piston-cylinder mechanism, because a piston rod is placed in one of the two gas chambers, a difference is produced in pressure-receiving areas of the piston facing the two gas chambers. When the piston-cylinder mechanism is used as a damper, even when the pressures of the two gas chambers are equal to each other, a redundant thrust to move the piston in one direction is produced by the difference in the pressure-receiving area. When a redundant thrust is produced in the piston, the performance as the damper is degraded. In particular, in the case of a damper which operates by a high-pressure gas, the redundant thrust may become large, and the function of the damper may become insufficient.

An advantage of the present invention lies in the provision of a damper device which can suppress a difference in pressure-receiving areas of gas chambers divided into two by a piston-cylinder mechanism.

### SOLUTION TO PROBLEM

According to one aspect of the present invention, there is provided a damper device according to claim 1.

According to another aspect of the present invention, preferably, in the damper device, the piston head has the outer circumferential portion having a circular shape and the hole with a bottom having a circular hole shape, the rod has an outer shape of a circle, a pressure-receiving area of the piston head on the side of the first gas chamber is expressed by {(an outer diameter of the piston head)² - (an inner diameter of the hole with the bottom)²} ^{∗} constant, and a pressure-receiving area of the piston head on the side of the second gas chamber is expressed by {(the outer diameter of the piston head)² - (an outer diameter of the rod)²} ^{∗} constant, and a thrust in an axial direction of the piston unit produced due to a difference in the pressure-receiving areas when a pressure of the first gas chamber and a pressure of the second gas chamber are equal to each other is proportional to {(the outer diameter of the rod)² - (the inner diameter of the hole with the bottom)²}.

According to another aspect of the present invention, preferably, in the damper device, a high-pressure gas having a pressure increased from a supply pressure is supplied to the first gas chamber and the second gas chamber.

According to another aspect of the present invention, preferably, in the damper device, the first gas chamber and the second gas chamber are connected to each other through a variable aperture having an amount of aperture that varies according to an external acceleration.

According to another aspect of the present invention, preferably, in the damper device, when the damper device is equipped in a car for suppressing a relative vibration between a platform car portion and a car body portion of the car, the first gas chamber and the second gas chamber are connected to each other through a variable aperture having an amount of aperture variable according to a lateral acceleration of the car.

### ADVANTAGEOUS EFFECTS OF INVENTION

In the damper device having the above-described configuration, in a mechanism having a piston unit and a cylinder unit, a hole with a bottom which extends from a side opposite from a surface on which a rod extends and through the inside of the rod is provided in the piston head of the piston unit, and a guide shaft which has a tip having an outer peripheral surface that slides on an inner wall surface of the hole with the bottom is provided. In the piston unit, the hole with the bottom is guided along the outer peripheral surface of the guide shaft, and an outer circumferential portion of the piston unit is guided to the sliding inner wall surface of the cylinder unit to move along a sliding center axis. With such a configuration, the first gas chamber and the second gas chamber act as a damper with respect to the movement of the piston unit. In this configuration, the pressure-receiving areas on both sides of the piston head are reduced, with reference to an area determined by the outer diameter of the piston head, by an area determined by the outer diameter of the rod on the surface on which the rod extends and by an area of an opening of the hole with the bottom on the surface opposite from the surface on which the rod extends. Therefore, the difference in the pressure-receiving area can be suppressed by thinning a thickness which is a difference between the outer diameter of the rod and the inner diameter of the hole with the bottom.

In addition, in the damper device of the present invention, because the difference in the pressure-receiving areas is proportional to {(the outer diameter of the rod)² - (the inner diameter of the hole with the bottom) }, the difference in the pressure-receiving areas can be suppressed by thinning the thickness which is the difference between the outer diameter of the rod and the inner diameter of the hole with the bottom.

Moreover, in the damper device of the present invention, because a high-pressure gas having the pressure increased from the supply pressure is supplied to the first gas chamber and the second gas chamber, the redundant thrust produced on the piston unit due to the difference in the pressure-receiving areas can be suppressed when the damper device is operated by high-pressure gas.

Furthermore, in the damper device of the present invention, the first gas chamber and the second gas chamber are connected to each other through a variable aperture having an amount of aperture variable according to an external acceleration. With this configuration, a damper of a semi-active type can be realized.

In addition, in the damper device of the present invention, when the damper device is equipped on a car, the damper devices are respectively placed at a front wheel side and a rear wheel side of the car such that the movement directions are opposite from each other between the front wheel side of the car and a rear wheel side of the car. Therefore, when a redundant thrust is produced in the piston unit of each of the damper devices, the directions of the thrusts would be opposite between the front wheel side of the car and the rear wheel side of the car, and thus, the car would be subjected to torsion with respect to the front-and-rear direction. In particular, when the damper is operated with high-pressure gas, the torsion would be large. According to a structure that suppresses the difference in the pressure-receiving areas, such torsion on the car can be suppressed.

### BRIEF DESCRIPTION OF DRAWINGS

FIG. 1 is a structural diagram of a high-pressure operated, semi-active type damper system in which a damper device according to a preferred embodiment of the present invention is used.
FIG. 2 is a cross-sectional diagram showing a damper device according to a preferred embodiment of the present invention.
FIG. 3 is a diagram showing an operation and effect of a damper device according to a preferred embodiment of the present invention when equipped on a railroad car.

### DESCRIPTION OF EMBODIMENTS

A preferred embodiment of the present invention will now be described in detail with reference to the drawings. In the following description, as a damper system in which a damper device is used, there is described a semi-active damper system in which a variable aperture device is provided in the damper device, but alternatively, the damper system may be a passive damper system in which the variable aperture device is not provided. In addition, in the following description, as the damper system in which the damper device is used, there is described a system to which high-pressure gas from a pressure-increasing device is supplied to the damper device, but alternatively, the damper system may be a damper system in which the pressure-increasing device is not provided.

Moreover, as the damper system, a damper system equipped on a railroad car and which suppresses vibration of the car will be described, but this is merely exemplary for the purpose of description, and the damper system may be used in usages other than equipment in the railroad car, so long as the damper device has a cylinder unit which is divided into two gas chambers by a piston and in which the two gas chambers act as a damper with respect to the movement of the piston.

In addition, there will be described a configuration in which, when the damper device is equipped on the railroad car, a housing of the cylinder unit is attached on the platform car side and a rod of the piston unit is attached on the car body side. However, this configuration is merely exemplary for the purpose of description, and alternatively, there may be employed a configuration in which the housing of the cylinder unit is attached on the car body side and the rod of the piston unit is attached on the platform car side.

Moreover, the railroad car is described as a pendulum car in which the car body is supported by a pendulum beam through an air spring, but this is merely exemplary for the purpose of description. In the case of the pendulum car, the rod is attached on the pendulum beam, but in the case of a railroad car which does not use the pendulum beam, the rod may be attached directly on the car body.

In the following, air is described as gas applied to the damper system, but the "air" in this description is of a wide definition, and includes, in addition to the atmospheric air, gas having similar constituting components such as, for example, dried air, nitrogen gas, or the like.

A size, a numerical value, or the like described below are merely exemplary for the purpose of description, and may be suitably modified according to the specification of the damper device, the damper system, or the like. In the following, similar elements in the drawings are assigned similar reference numerals, and their descriptions will not be repeated.

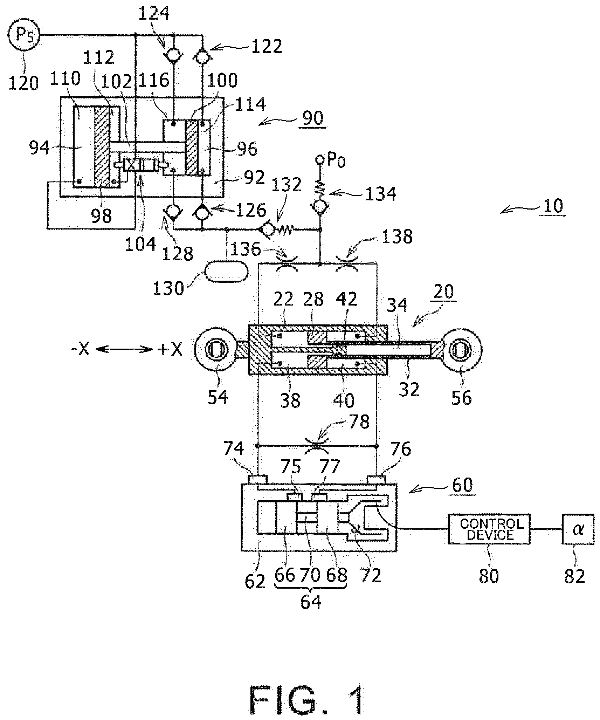

FIG. 1 is a diagram showing a structure of a damper system 10 in which a damper device 20 is used. The damper system 10 is a semi-active damper system which has the damper device 20, a variable aperture device 60 placed in parallel to the damper device 20, and a pressure-increasing device 90 which increases a supply pressure and supplies the processed gas to the damper device 20, and which operates with high-pressure gas. The damper system 10 is equipped on a railroad car, and the variable aperture device 60 has an amount of aperture that varies according to an acceleration (α) 82 in a lateral direction experienced by the car. In FIG. 1, an axial direction of the damper device 20, an axial direction of the variable aperture device 60, and an axial direction of the pressure-increasing device 90 are shown as an X direction.

The damper device 20 of the damper system 10 will be described first, and then, the variable aperture device 60, the pressure-increasing device 90, and pipes connecting these devices, or the like will be described, and the overall operation of the damper system 10 will be described.

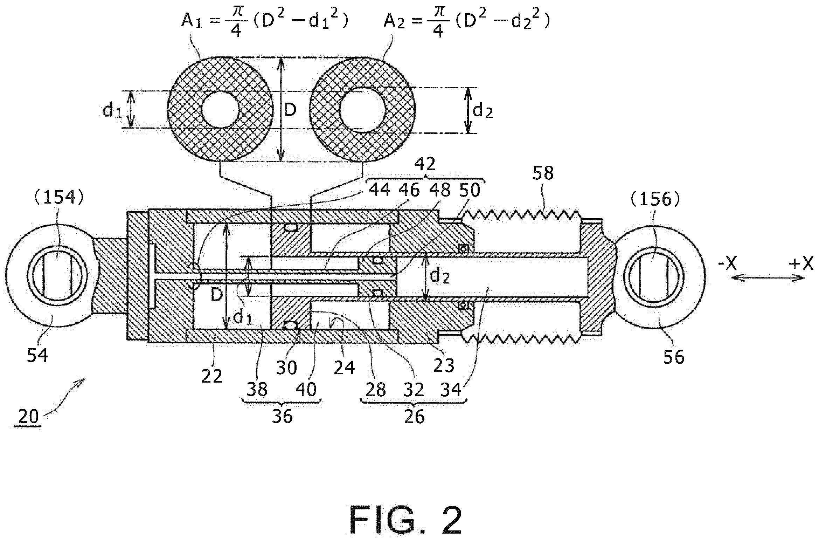

FIG. 2 is a detailed cross-sectional diagram of the damper device 20. The damper device 20 has a cylinder unit 22 and a piston unit 26, and is a device that produces an attenuation force approximately proportional to a movement velocity of the piston unit 26 with respect to the cylinder unit 22, utilizing a fluid resistance of the gas in the cylinder unit 22. The damper device 20 is placed between a platform car side of the railroad car and the car body side of the railroad car, and has a function to suppress vibration between the platform car side and the car body side. Here, in order to suppress redundant thrust produced due to the difference in the pressure-receiving areas of the two surfaces of the piston head 28 of the piston unit 26, a hole with a bottom 34 is provided on the piston unit 26, and a guide shaft 42 having an outer peripheral surface which slides on an inner wall surface of the hole with the bottom 34 is provided to be fixed on the cylinder unit 22.

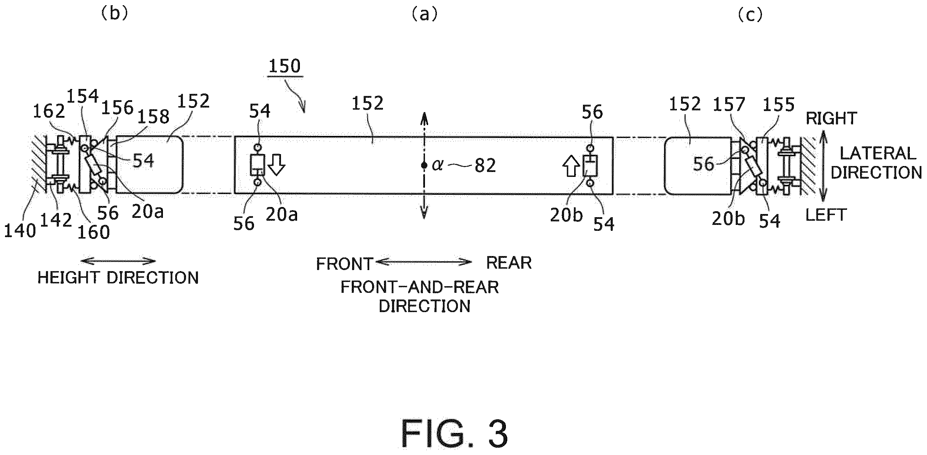

The cylinder unit 22 is a cylindrical member having an internal space 36 having a contacting inner wall surface 24, and supports movement of the piston unit 26 in the axial direction by the contacting inner wall surface 24. The cylinder unit 22 is also a housing for the overall damper device 20. An attachment portion 54 provided on the cylinder unit 22 is rotatably attached on an attachment shaft of a platform car 154 of the railroad car (refer to FIG. 3).

The piston unit 26 has a piston head 28, a rod 32, and the hole with the bottom 34 which extends through the inside of the rod 32.

The piston head 28 is a circular disk-shaped portion having an outer circumferential portion 30 which slides on the contacting inner wall surface 24 of the cylinder unit 22. Preferably, a shield ring or the like suitable for maintaining airtightness is provided between the outer circumferential portion 30 and the contacting inner wall surface 24 of the cylinder unit 22. As the shield ring, a piston ring made of a metal, an O-ring, or the like may be used. In FIG. 2, a diameter of the outer circumferential portion 30 of the piston head 28 is shown with D. An inner diameter of the contacting inner wall surface 24 of the cylinder unit 22 is set depending on the specification of the damper device 20, and is, for example, a few µm larger than D.

With the piston head 28, the internal space 36 of the cylinder unit 22 is separated into two gas chambers. On a side of -X; that is, a gas chamber on the side of the attachment portion 54 is called a first gas chamber 38, and a gas chamber on the side opposite from the first gas chamber 38 with the piston head 28 therebetween is called a second gas chamber 40.

The rod 32 is a rod-shaped portion having a circular outer shape extending from an end of the piston head 28 on the side of the second gas chamber 40. In FIG. 2, a diameter of the rod 32 is shown with d₂. The outer diameter d₂ of the rod 32 is set in consideration of the strength for enduring the force applied between the platform car side and the car body side by the lateral vibration of the railroad car or the like. As an example, d₂ ≥ 35 mm. When the outer diameter is smaller, the strength of the railroad car may become insufficient.

The rod 32 is slidably held by a rod support portion 23 of the cylinder unit 22. A shield ring or the like suitable for maintaining the airtightness is preferably provided between the outer peripheral surface of the rod 32 and the sliding inner wall surface of the rod support portion 23. As the shield ring, a piston ring made of a metal, an O-ring, or the like may be used. The diameter of the sliding inner wall surface of the rod support portion 23 is set depending on the specification of the damper device 20, and is, for example, a few µm larger than the outer diameter d₂ of the rod 32.

An attachment portion 56 provided at a tip of the rod 32 in the +X direction is rotatably attached on an attachment shaft of a pendulum beam 156 (refer to FIG. 3) on the car body side of the railroad car. A bellows portion 58 provided between the rod support portion 23 and the attachment portion 56 is an extendable protection cover which prevents intrusion of foreign objects such as dust between the rod 32 and the sliding inner wall surface of the rod support portion 23.

The hole with the bottom 34 is a circular hole with a bottom which opens on the piston head 28 on the side of the first gas chamber 38, and extends through the inside of the rod 32 toward the side of the second gas chamber 40. The hole with the bottom 34 is provided to suppress redundant thrust produced due to the difference of pressure-receiving areas on the two surfaces of the piston head 28. In FIG. 2, an inner diameter of the hole with the bottom 34 is shown with d₁.

The guide shaft 42 is an elongated fixed shaft having a base portion 44 fixed on the cylinder unit 22 on the side of the first gas chamber 38, a shaft portion 46 extending from the base portion 44 toward the side of the piston unit 26, coaxial with a sliding center axis of the piston unit 26, and a tip portion 48 provided at a tip of the shaft portion 46 and having an outer peripheral surface which slides on the inner wall surface of the hole with the bottom 34 of the piston unit 26. A hole penetrating through the centers of the base portion 44, the shaft portion 46, and the tip portion 48 is an atmosphere communication hole for allowing escape of the pressure of the hole with the bottom 34 beyond the tip portion 48. The atmosphere communication hole is in communication with the atmosphere at the outside, from a suitable location of the cylinder unit 22 on which the base portion 44 is provided.

The guide shaft 42 has a function to slide and guide the piston unit 26 along the hole with the bottom 34. A shield ring or the like suitable for maintaining the airtightness is provided between the outer peripheral surface of the tip portion 48 of the guide shaft 42 and the inner wall surface of the hole with the bottom 34. As the shield ring, a piston ring made of a metal, an O-ring, or the like may be used. A diameter of the outer peripheral surface of the tip portion 48 is set depending on the specification of the damper device 20, and is, for example, a few µm smaller than the inner diameter d₁ of the sliding inner wall surface of the hole with the bottom 34.

At an upper part of FIG. 2, a pressure-receiving area A₁ of the piston head 28 on the side of the first gas chamber 38 and a pressure-receiving area A₂ on the side of the second gas chamber 40 are shown. As shown therein, the pressure-receiving area A₁ of the piston head 28 on the side of the first gas chamber 38 is shown with {(the outer diameter D of the piston head 28)² - (the inner diameter d₁ of the hole with the bottom)²} ^{∗} (π/4), and the pressure-receiving area A₂ of the piston head 28 on the side of the second gas chamber 40 is shown by {(the outer diameter D of the piston head 28)² - (the outer diameter d₂ of the rod 32)²} ^{∗} (π/4).

Therefore, a thrust in the axial direction of the piston unit 26 produced due to a difference in the pressure-receiving areas when the pressure of the first gas chamber 38 and the pressure of the second gas chamber 40 are equal to each other is proportional to {(the outer diameter d₂ of the rod 32)² - (the inner diameter d₁ of the hole with the bottom)²}. In other words, a thickness t = (d₂ - d₁)/2 of the rod 32 having the hole with the bottom which corresponds to a difference between the outer diameter d₂ of the rod 32 and the inner diameter d₁ of the hole with the bottom 34 is preferably as thin as possible within an allowable limit of the strength, in order to suppress the redundant thrust produced in the piston unit 26.

An example calculation will now be shown. In a configuration of related art having D = 80 mm and d₂ = 35 mm, and which does not have the hole with the bottom 34, if the pressure-receiving area of the piston head 28 on the side of the first gas chamber 38 is A₀, A₀ = (the outer diameter D of the piston head 28)^{2 ∗} (π/4) = 80^{2 ∗} (π/4) = 5,024 mm², and the pressure-receiving area A₂ of the piston head 28 on the side of the second gas chamber 40 is A₂ = {(the outer diameter D of the piston head 28)² - (the outer diameter d₂ of the rod 32)²} ^{∗} (π/4) = (80² - 35²) ^{∗} (π/4) = 4,062 mm². Thus, the difference in the pressure-receiving areas in the related art is (the outer diameter d₂ of the rod 32)^{2 ∗} (π/4) = 1,225 ^{∗} (π/4) = 962 mm², and is 19% of A₀.

On the contrary, when the hole with the bottom 34 having a circular hole shape is provided and has an inner diameter d₂ = 30 mm, the pressure-receiving area A₁ of the piston head 28 on the side of the first gas chamber 38 is A₁ = {(the outer diameter D of the piston head 28)² - (the inner diameter d₁ of the hole with the bottom)²} ^{∗} (π/4) = (80² - 30²) ^{∗} (π/4) = 4,318 mm². The pressure-receiving area A₂ of the piston head 28 on the side of the second gas chamber 40 is identical to that in the related art and A₂ = {(the outer diameter D of the piston head 28)² - (the outer diameter d₂ of the rod 32)²} ^{∗} (π/4) = (80² - 35²) ^{∗} (π/4) = 4,062 mm². Therefore, a difference in the pressure-receiving areas when the hole with the bottom 34 having the circular hole shape is provided is {(the outer diameter d₂ of the rod 32)² - (the inner diameter d₁ of the hole with the bottom)²} ^{∗} (π/4) = (35² - 30²) ^{∗} (π/4) = 256 mm², which is only 6% of A₁.

In this manner, in the damper device 20, by providing the hole with the bottom 34 in the piston unit 26, the difference in the pressure-receiving areas between the two surfaces of the piston head 28 can be significantly suppressed. With such a configuration, the hole with the bottom 34 of the piston unit 26 is guided along the outer peripheral surface of the tip portion 48 of the guide shaft 42 while suppressing production of redundant thrust due to the difference in the pressure-receiving area, the outer circumferential portion 30 is guided to the inner wall surface 24 of the cylinder unit 22 and can move along the sliding center axis, and the first gas chamber 38 and the second gas chamber 40 act as a damper with respect to the movement of the piston unit 26.

The damper device 20 has been described. With reference to FIG. 1 again, there will now be described the variable aperture device 60, the pressure-increasing device 90, or the like which are other constituting elements of the damper system 100.

The variable aperture device 60 is an aperture device provided in parallel to the damper device 20, and is a device which adjusts an amount of circulation of the gas; that is, an ease of the gas to flow, between the first gas chamber 38 and the second gas chamber 40 by an aperture. By adjusting the ease of flow of the gas, the movement of the damper device 20 can be slowed down or accelerated.

The variable aperture device 60 includes a sleeve 62 serving as a housing, a spool 64, and an actuator 72 which moves and drives the spool 64 in the X direction, which is the axial direction of the sleeve 62. On an inner wall surface of the sleeve 62, there are provided a first port 75 in communication with a first input/output unit 74 to be connected to the first gas chamber 38, and a second port 77 in communication with a second input/output unit 76 to be connected the second gas chamber 40, each facing the spool 64. The spool 64 includes land sections 66 and 68 having a large size, and a stem 70 connecting the land sections and having a small size. The actuator 72 is a force motor having a movable coil connected to the spool 64 and a magnet provided on a housing, and a drive current applied to the movable coil is controlled by a control device 80. The control device 80 controls a direction and a size of the drive current according to a direction and a size of a lateral acceleration α of the car.

When the lateral acceleration α of the car is smaller than a predefined threshold, the actuator 72 is not driven, and the position of the spool 64 with respect to the sleeve 62 is maintained at a neutral state by a neutral maintenance spring (not shown). In the neutral state, the first port 75 is set in a semi-open state by the land section 66, and the second port 77 is set in a semi-open state by the land section 68. Therefore, the first gas chamber 38 and the second gas chamber 40 are in communication with each other in the semi-open states.

When the car receives a small vibration by the air spring or the like while the variable aperture device 60 is in the neutral state, the positional relationship between the platform car side and the car body side changes, and the spacing between the attachment portions 54 and 56 of the damper device 20 is changed accordingly. The change in the spacing between the attachment portions 54 and 56 is transferred as a movement of the piston unit 26 with respect to the cylinder unit 22 of the damper device 20, and a movement velocity thereof is determined by the ease of flow of the gas between the first gas chamber 38 and the second gas chamber 40. In the neutral state of the variable aperture device 60, the ease of flow is determined by the semi-open states of the first port 75 and the second port 77. Under this ease of flow, the piston unit 26 moves with respect to the cylinder 22 of the damper device 20, and attenuates the vibration of the car. This is the vibration suppression operation of the damper device 20 in the neutral state of the variable aperture device 60.

When the lateral acceleration α of the car becomes larger to exceed the threshold, the control device 80 moves the spool 64 in the axial direction according to the size of α, to reduce the circulation state between the first port 75 and the second port 77. According to the direction of the acceleration α, the movement direction of the spool 64 along the axial direction is changed, and, as the absolute value of the acceleration α becomes larger, the amount of movement of the spool 64 is set larger. As the amount of movement of the spool 64 becomes larger, the gas flow between the first port 75 and the second port 77 is reduced and the flow becomes more difficult. Thus, the movement of the piston unit 26 with respect to the cylinder unit 22 of the damper device 20 becomes slower. With this configuration, even when the car receives a large lateral acceleration α, the vibration of the car can be slowed down, and the comfort of the passengers can be improved.

Alternatively, the variable aperture device 60 may have structures other than that described above, so long as the device is connected between the first gas chamber 38 and the second gas chamber 40, and varies the amount of aperture according to the external acceleration α.

A fixed aperture device 78 is an aperture device provided in parallel to the damper device 20 and the variable aperture device 60, and has a function to ensure a minimum value for an amount of circulation of the gas between the first gas chamber 38 and the second gas chamber 40.

The pressure-increasing device 90 is a high-pressure gas supply device which increases a supply pressure Ps of the gas supplied from a supply source 120 and supplies the pressure-increased gas to the first gas chamber 38 and the second gas chamber 40 of the damper device 20, so that the operation of the damper device 20 is executed under high-pressure gas.

The pressure-increasing device 90 has a housing 92, a drive chamber 94 and a pressure-increasing chamber 96 provided in the housing 92, a drive piston 98 placed in the drive chamber 94, a pressure-increasing piston 100 placed in the pressure-increasing chamber 96, a cooperation shaft 102 which causes the drive piston 98 and the pressure-increasing piston 100 to cooperate, and a switching unit 104 provided over the drive chamber 94 and the pressure-increasing chamber 96. Here, a diameter of the drive piston 98 is set larger than a diameter of the pressure-increasing piston 100. The drive piston 98 is a drive means for reciprocatingly driving the cooperation shaft 102, and the pressure-increasing piston 100 is a pressure-increasing means for gradually increasing the supply pressure Ps by being reciprocatingly driven by the drive piston 98.

The drive piston 98 is a piston which slides and moves in the axial direction along an inner wall surface of the drive chamber 94. With the drive piston 98, the drive chamber 94 is divided into two gas chambers. In this description, a gas chamber on a -X side of the drive piston 98 is called an A drive chamber 110, and a gas chamber on the +X side is called a B drive chamber 112.

Similarly, the pressure-increasing piston 100 is a piston which slides and moves in the axial direction along an inner wall surface of the pressure-increasing chamber 96. With the pressure-increasing piston 100, the pressure-increasing chamber 96 is divided into two gas chambers. A gas chamber on the +X side of the pressure piston 100 is called an A pressure-increasing chamber 114, and a gas chamber on the -X side is called a B pressure-increasing chamber 116.

A check valve 122 is provided between the supply source 120 and the A pressure-increasing chamber 114, so that the A pressure-increasing chamber 114 at least has the supply pressure Ps, and a check valve 124 is provided between the supply source 120 and the B pressure-increasing chamber 116 so that the pressure of the B pressure-increasing chamber 116 does not exceed the supply pressure Ps.

The switching unit 104 is a switching valve which switches between supplying gas from the supply source 120 to the A drive chamber 110 and supplying gas from the supply source 120 to the B drive chamber 112. When the gas from the supply source 120 is supplied to the A drive chamber 110 and the B drive chamber 112 is opened to the atmosphere with the switching, the drive piston 98 and the pressure-increasing piston 100 are moved in the -X direction. When the pistons move in the -X direction to the limit, the pressure-increasing piston 100 contacts a switching terminal of the switching unit 104. With this process, the switching unit 104 switches the supply such that the gas from the supply source 120 is supplied to the B drive chamber 112, and the A drive chamber 110 is opened to the atmosphere. With this switching, the drive piston 98 and the pressure-increasing piston 100 are moved in the +X direction. When the pistons are moved in the +X direction to the limit, the drive piston 98 contacts a switching terminal of the switching unit 104. With this process, the switching unit 104 switches the supply such that the gas from the supply source 120 is supplied to the A drive chamber 110, and the B drive chamber 112 is opened to the atmosphere. In this manner, with the function of the switching unit 104, the drive piston 98 and the pressure-increasing piston 100 repeat the reciprocating movement in the ±X directions.

A check valve 126 is provided between the A pressure-increasing chamber 114 and the damper device 20 so that, when the pressure of the A pressure-increasing chamber 114 is higher than the pressure of the damper device 20, the high-pressure gas can be supplied to the damper device 20. In addition, a check valve 128 is provided between the B pressure-increasing chamber 116 and the damper device 20 so that the pressure of the B pressure-increasing chamber 96 does not become lower than the pressure of the damper device 20.

Because the diameter of the drive piston 98 is larger than the diameter of the pressure-increasing piston 100, when the pressure-increasing piston 100 repeats the reciprocating movement in the pressure-increasing chamber 96, due to the diameter difference, the pressure in the A pressure-increasing chamber 114 is gradually increased from the supply pressure Ps. In this manner, the supply pressure Ps is increased, and is supplied to the damper device 20 through the check valve 126.

Alternatively, the pressure-increasing device 90 may have structures other than that described above, so long as the device supplies a high-pressure gas having the pressure increased from the supply pressure to the first gas chamber 38 and the second gas chamber 40 of the damper device 20.

A buffer tank 130 is a gas tank provided between the damper device 20 and the pressure-increasing device 90. Because the damper device 20 is a piston-cylinder mechanism, there is a leakage of gas in a small amount, and the leakage must be compensated for. The buffer tank 130 has a function, in order to compensate for the leakage, to temporarily store gas having the pressure increased by the action of the pressure-increasing device 90 and to supply the gas to the first gas chamber 38 and the second gas chamber 40 of the damper device 20.

An increased-pressure checking valve 132 placed in series between the buffer tank 130 and the damper device 20 is a device for supplying only the gas having the pressure increased to a pressure greater than or equal to a predefined high pressure to the damper device 20. As an example, the supply pressure Ps may be set 0.8 MPa, and the increased-pressure checking pressure of the increased-pressure checking valve 132 may be set about 3 MPa ∼ 5 MPa. In other words, high-pressure gas having the pressure increased from the supply pressure Ps by a factor of about 4 ∼ 6 times is supplied to the damper device 20. With this configuration, the size of the damper device 20 can be reduced.

An open checking valve 134 provided between the increased-pressure checking valve 132 and the atmosphere (P₀) is a safety valve that prevents the increased high pressure from exceeding the endurance pressure of the damper device 20. The open checking pressure of the open checking valve 134 depends on the endurance pressure specification of the damper device 20, and is, for example, about 15 MPa.

Fixed aperture devices 136 and 138 are aperture devices which limit supply velocity of the pressure-increased, high-pressure gas. With this configuration, the pressure-increased, high-pressure gas is supplied to the first gas chamber 38 and the second gas chamber 40 of the damper device 20 at a suitable supply velocity, and the damper device 20 can operate under the high-pressure gas.

FIG. 3 is a diagram for explaining an operation and an effect when two damper devices 20a and 20b are equipped in one railroad car 150. FIG. 3(a) is a plan view of the railroad car 150, and shows a front-and-rear direction. Here, a left side on the page is a front side, and a right side is a rear side. FIG. 3(b) is a diagram of the railroad car 150 as viewed from the front side, and FIG. 3(c) is a diagram of the railroad car 150 as viewed from the rear side. These drawings show the lateral direction and the height direction.

The damper device 20a is provided at the front side of the railroad car 150, and the damper device 20b is provided at the rear side of the railroad car 150. FIG. 3(b) shows the placement of the damper device 20a at the front side of the railroad car 150, and FIG. 3(c) shows the placement of the damper device 20b at the rear side of the railroad car 150.

As shown in FIG. 3(b), the railroad car 150 has a car body 152, the platform car 154, the pendulum beam 156 supported by a suitable roller on the platform car 154, and an air spring 158 provided between the pendulum beam 156 and the car body 152. In addition, the railroad car 150 includes a front side axle which supports a wheel 160, and a coil spring 162 provided between the axle and the platform car 154, and the wheel 160 can travel on a rail 142 placed on a road surface 140.

In the damper device 20a, the attachment portion 54 of the cylinder unit 22 is rotatably attached to an attachment shaft provided on the platform car 154, and the attachment portion 56 of the rod 32 of the piston unit 26 is rotatably attached to an attachment shaft provided on the pendulum beam 156. The damper device 20a is placed in an orientation such that the X direction coincides with a width direction of the railroad car 150. The attachment portion 54 of the cylinder unit 22 is placed at a right side in the width direction, and the attachment portion 56 of the rod 32 is placed on a left side in the width direction.

FIG. 3(c) is a diagram of the railroad car 150 as viewed from the rear side. Here, the platform car 155 and the pendulum beam 157 are shown, with different reference numerals being assigned in order to distinguish from the front side. Similar to the damper device 20a, in the damper device 20b, the attachment portion 54 of the cylinder unit 22 is rotatably attached to an attachment shaft provided on a platform car 155, and the attachment portion 56 of the rod 32 of the piston unit 26 is rotatably attached to an attachment shaft provided on a pendulum beam 157. The damper device 20b is placed in an orientation such that the X direction coincides with the width direction of the railroad car 150, but the placement orientation is symmetric with respect to the damper device 20a. Thus, the attachment portion 54 of the cylinder unit 22 is placed on the left side in the width direction, and the attachment portion 56 of the rod 32 is placed at the right side in the width direction.

In this manner, the placement orientations of the damper device 20a placed at the front side of the railroad car 150 and of the damper device 20b placed at the rear side are set symmetric from each other, so that the movements of the damper devices 20a and 20b can be cancelled for the railroad car 150 as a whole.

Such a symmetric placement of the damper devices 20a and 20b at the front side and the rear side of the railroad car 150 causes no problem when both damper devices 20a and 20b are stationary in the neutral state. However, when a redundant thrust is produced in the damper devices 20a and 20b in the neutral state, the directions of the thrusts are in direction opposite from each other along the width direction, and a moment that twists the railroad car 150 along the front-and-rear direction would be produced. FIG. 3 shows the production of the redundant thrust with an outlined arrow.

As described above with reference to FIG. 2, in the related art, the difference in the pressure-receiving areas between the surfaces of the piston head 28 is 962 mm². Because the pressure of the high-pressure gas supplied to the first gas chamber 38 and the second gas chamber 40 is 3 MPa ∼ 5 MPa, the redundant thrust that is produced is (3 MPa ∼ 5 Mpa) ^{∗} 9.63 cm² = about 3000 N ∼ 5000 N. When a length of the railroad car 150 along the front-and-rear direction is L m, the railroad car 150 would receive a torsional moment of about (3000L ∼ 5000L) Nm.

In the preferred embodiment shown in FIG. 2, the difference in the pressure-receiving areas between the surfaces of the piston head 28 is 256 mm², which is 26.6% of that in the related art. Therefore, the size of the torsional moment received by the railroad car 150 with the same pressure of the high-pressure gas is about (800L - 1330L) Nm, which is significantly reduced from the related art.

## Claims

1. A damper device (20), comprising:
a cylinder unit (22) including an internal space (36) having a contacting inner wall surface (24);
a piston unit (26) having a piston head (28) that has an outer circumferential portion (30) that slides on the contacting inner wall surface (24) of the cylinder unit (22) and that divides the internal space (36) of the cylinder unit (22) into a first gas chamber (38) and a second gas chamber (40), a rod (32) that extends from an end of the piston head (28) on a side of the second gas chamber (40), and a hole with a bottom (34) that opens on the piston head (28) on a side of the first gas chamber (38) and that extends through an inside of the rod (32) toward the side of the second gas chamber (40); and
a guide shaft (42) having a base portion (44) that is fixed on the cylinder unit (22) on a side of the first gas chamber (38), a shaft portion (46) that extends from the base portion (44) toward a side of the piston unit (26), coaxial with a sliding center axis of the piston unit (26), a tip portion (48) that is provided on a tip of the shaft portion (46) and that has an outer peripheral surface that slides on an inner wall surface of the hole with the bottom (34) of the piston unit (26), and a shield ring for maintaining airtightness provided between the outer peripheral surface of the tip portion (48) of the guide shaft (42) and the inner wall surface of the hole with the bottom (34),
wherein in the piston unit (26), the hole with the bottom (34) is guided along the outer peripheral surface of the guide shaft (42), and the outer circumferential portion (30) is guided on the contacting inner wall surface (24) of the cylinder unit (22), to move along the sliding center axis, such that the first gas chamber (38) and the second gas chamber (40) act as a damper with respect to a movement of the piston unit (26),
**characterised in that** the shield ring is retained within the outer peripheral surface of the tip portion (48) of the guide shaft (42).

2. The damper device (20) according to Claim 1, wherein:
the piston head (28) has the outer circumferential portion (30) having a circular shape and the hole with the bottom (34) having a circular hole shape;
the rod (32) has an outer shape of a circle;
a pressure-receiving area of the piston head (28) on the side of the first gas chamber (38) is expressed by {(an outer diameter of the piston head (28))² - (an inner diameter of the hole with
the bottom)²} ^{∗} constant, and a pressure-receiving area of the piston head (28) on the side of the second gas chamber (40) is expressed by {(the outer diameter of the piston head (38))² - (an outer diameter of the rod (32))²} ^{∗} a constant; and
a thrust in an axial direction (X) of the piston unit (26) produced due to a difference in the pressure-receiving areas when a pressure of the first gas chamber (38) and a pressure of the second gas chamber (40) are equal to each other is proportional to {(the outer diameter of the rod (32))² - (the inner diameter of the hole with the bottom (34))²}.

3. The damper device (20) according to Claim 1, wherein the first gas chamber (38) and the second gas chamber (40) are connected to each other through a variable aperture (60) having an amount of aperture variable according to an external acceleration.

4. The damper device (20) according to Claim 3, wherein when the damper device (20) is equipped in a car (150) for suppressing a relative vibration between a platform car portion (154) and a car body portion (152) of the car (150), the first gas chamber (38) and the second gas chamber (40) are connected to each other through a variable aperture (60) having an amount of aperture variable according to a lateral acceleration of the car (150).

## Patentansprüche

1. Dämpfungsvorrichtung (20), umfassend:
eine Zylindereinheit (22), einen Innenraum (36) mit einer kontaktierenden inneren Wandfläche (24) einschließend;
eine Kolbeneinheit (26) mit einem Kolbenkopf (28), der einen äußeren Umfangsabschnitt (30) aufweist, der auf der kontaktierenden inneren Wandfläche (24) der Zylindereinheit (22) gleitet und der den Innenraum (36) der Zylindereinheit (22) in eine erste Gaskammer (38) und eine zweite Gaskammer (40) unterteilt, eine Stange (32), die sich von einem Ende des Kolbenkopfes (28) auf einer Seite der zweiten Gaskammer (40) erstreckt, und ein Loch mit einem Boden (34), das sich am Kolbenkopf (28) auf einer Seite der ersten Gaskammer (38) öffnet und das sich durch ein Inneres der Stange (32) in Richtung der Seite der zweiten Gaskammer (40) erstreckt; und
einen Führungsschaft (42) mit einem Basisabschnitt (44), der an der Zylindereinheit (22) auf einer Seite der ersten Gaskammer (38) befestigt ist, einen Schaftabschnitt (46), der sich von dem Basisabschnitt (44) zu einer Seite der Kolbeneinheit (26) erstreckt, koaxial zu einer gleitenden Mittelachse der Kolbeneinheit (15) (26), einen Spitzenabschnitt (48), der an einer Spitze des Schaftabschnitts (46) bereitgestellt ist und der eine äußere Umfangsfläche aufweist, die auf einer inneren Wandfläche des Lochs mit dem Boden (34) der Kolbeneinheit (26) gleitet, und einen Abschirmring zur Aufrechterhaltung der Luftdichtheit, der zwischen der äußeren Umfangsfläche des Spitzenabschnitts (48) des Führungsschafts (42) und der inneren Wandfläche des Lochs mit dem Boden (34) bereitgestellt ist,
wobei in der Kolbeneinheit (26) das Loch mit dem Boden (34) entlang der äußeren Umfangsfläche des Führungsschaftes (42) geführt ist und der äußere Umfangsabschnitt (30) an der kontaktierenden inneren Wandfläche (24) der Zylindereinheit (22) geführt ist, um sich entlang der gleitenden Mittelachse so zu bewegen, dass die erste Gaskammer (38) und die zweite Gaskammer (40) als ein Dämpfer in Bezug auf eine Bewegung der Kolbeneinheit (26) wirken,
**dadurch gekennzeichnet, dass** der Abschirmring innerhalb der äußeren Umfangsfläche des Spitzenabschnitts (48) des Führungsschafts (42) gehalten wird.

2. Dämpfungsvorrichtung (20) nach Anspruch 1, wobei:
der Kolbenkopf (28) den äußeren Umfangsabschnitt (30) mit einer kreisförmigen Form und das Loch mit dem Boden (34) mit einer kreisförmigen Lochform aufweist; die Stange (32) eine Außenform eines Kreises aufweist;
eine Druckaufnahmefläche des Kolbenkopfes (28) auf der Seite der ersten Gaskammer (38) ausgedrückt wird durch
{(ein Außendurchmesser des Kolbenkopfes - (ein Innendurchmesser des Lochs mit dem Boden)²}^{∗}eine Konstante,
und eine Druckaufnahmefläche des Kolbenkopfes (28) auf der Seite der zweiten Gaskammer (40) ausgedrückt wird durch
{(der Außendurchmesser des Kolbenkopfes (38))² - (ein Außendurchmesser der Stange (32))²}^{∗}eine Konstante; und
ein Schub in einer axialen Richtung (X) der Kolbeneinheit (26), der aufgrund einer Differenz in den Druckaufnahmebereichen erzeugt wird, wenn ein Druck der ersten Gaskammer (38) und ein Druck der zweiten Gaskammer (40) einander gleich sind, proportional ist zu {(dem Außendurchmesser der Stange (32))² - (dem Innendurchmesser des Lochs mit dem Boden (34))²}.

3. Dämpfungsvorrichtung (20) nach Anspruch 1, wobei die erste Gaskammer (38) 10 und die zweite Gaskammer (40) durch eine variable Öffnung (60) mit einer Öffnungsgröße miteinander verbunden sind, die entsprechend einer äußeren Beschleunigung variabel ist.

4. Dämpfungsvorrichtung (20) nach Anspruch 3, wobei, wenn die Dämpfungsvorrichtung (20) in einem Kraftwagen (150) zum Unterdrücken einer relativen Schwingung zwischen einem Pritschenwagenabschnitt (154) und einem Wagenkarosserieabschnitt (152) des Kraftwagens (150) eingebaut ist, die erste Gaskammer (38) und die zweite Gaskammer (40) durch eine variable Öffnung (60) mit einer Öffnungsgröße miteinander verbunden sind, die entsprechend einer Querbeschleunigung des Wagens (150) variabel ist.

## Revendications

1. Dispositif amortisseur (20), comprenant :
une unité de cylindre (22) comprenant un espace interne (36) ayant une surface de paroi intérieure en contact (24) ;
une unité de piston (26) ayant une tête de piston (28) qui a une partie circonférentielle extérieure (30) qui coulisse sur la surface de paroi intérieure en contact (24) de l'unité de cylindre (22) et qui divise l'espace interne (36) de l'unité de cylindre (22) en une première chambre à gaz (38) et une seconde chambre à gaz (40), une tige (32) qui s'étend depuis une extrémité de la tête de piston (28) sur un côté de la seconde chambre à gaz (40), et un trou ayant un fond (34) qui s'ouvre sur la tête de piston (28) sur un côté de la première chambre à gaz (38) et qui s'étend à travers un intérieur de la tige (32) vers le côté de la seconde chambre à gaz (40) ; et
un arbre de guidage (42) ayant une partie de base (44) qui est fixée sur l'unité de cylindre (22) sur un côté de la première chambre à gaz (38), une partie d'arbre (46) qui s'étend depuis la partie de base (44) vers un côté de l'unité de piston (26), coaxial avec un axe central coulissant de l'unité de piston (26), une partie de pointe (48) qui est disposée sur une pointe de la partie d'arbre (46) et qui a un surface périphérique extérieure qui coulisse sur une surface de paroi intérieure du trou ayant le fond (34) de l'unité de piston (26), et un anneau de protection pour maintenir une étanchéité à l'air disposé entre la surface périphérique extérieure de la partie de pointe (48) de l'arbre de guidage (42) et la surface de paroi intérieure du trou ayant le fond (34),
dans lequel dans l'unité de piston (26), le trou ayant le fond (34) est guidé le long de la surface périphérique extérieure de l'arbre de guidage (42), et la partie circonférentielle extérieure (30) est guidée sur la surface de paroi intérieure en contact (24) de l'unité de cylindre (22), pour se déplacer le long de l'axe central coulissant, de sorte que la première chambre à gaz (38) et la seconde chambre à gaz (40) agissent comme un amortisseur par rapport à un mouvement de l'unité de piston (26),
**caractérisé en ce que** l'anneau de protection est retenu à l'intérieur de la surface périphérique extérieure de la partie de pointe (48) de l'arbre de guidage (42).

2. Dispositif amortisseur (20) selon la revendication 1, dans lequel :
la tête de piston (28) a la partie circonférentielle extérieure (30) ayant une forme circulaire et le trou ayant le fond (34) ayant une forme de trou circulaire ;
la tige (32) a une forme extérieure d'un cercle ;
une surface de réception de pression de la tête de piston (28) sur le côté de la première chambre à gaz (38) est exprimée par {(un diamètre extérieur de la tête de piston - (un diamètre intérieur du trou ayant le fond)²} ^{∗} constante, et une surface de réception de pression de la tête de piston (28) sur le côté de la seconde chambre à gaz (40) est exprimée par {(le diamètre extérieur de la tête de piston (38))² - (un diamètre extérieur de la tige (32))²} ^{∗} une constante ; et
une poussée dans une direction axiale (X) de l'unité de piston (26) produite en raison d'une différence dans les surfaces de réception de pression lorsqu'une pression de la première chambre à gaz (38) et une pression de la seconde chambre à gaz (40) sont égales l'une à l'autre est proportionnelle à {(le diamètre extérieur de la tige (32))² - (le diamètre intérieur du trou ayant le fond (34))²}.

3. Dispositif amortisseur (20) selon la revendication 1, dans lequel la première chambre à gaz (38) et la seconde chambre à gaz (40) sont connectées l'une à l'autre à travers une ouverture variable (60) ayant une quantité d'ouverture variable en fonction d'une accélération externe.

4. Dispositif amortisseur (20) selon la revendication 3, dans lequel lorsque le dispositif amortisseur (20) est équipé dans une wagon (150) pour atténuer une vibration relative entre une partie de wagon à plate-forme (154) et une partie de corps de wagon (152) du wagon (150), la première chambre à gaz (38) et la seconde chambre à gaz (40) sont connectées l'une à l'autre par une ouverture variable (60) ayant une quantité d'ouverture variable en fonction d'une accélération latérale du wagon (150).
